# FASCICULE DE BREVET EUROPEEN

(11) **EP 1 226 299 B1**
(45) Date de publication et mention de la délivrance du brevet: **28.05.2003**
(21) Numéro de dépôt: 00971489.0
(22) Date de dépôt: 24.10.2000
(51) Int. Cl.: D04H 3/04, D04H 3/12

(54) **GRILLE NON TISSEE UTILISABLE COMME ARMATURE DE RENFORCEMENT**
GITTERVLIESE ZUR VERWENDUNG ALS VERSTÄRKUNGSGEWEBE
NON-WOVEN MESH USED AS A REINFORCING FRAME

(30) Priorité: 25.10.1999 FR 9913553
(43) Date de publication de la demande: 31.07.2002
(73) Titulaire: CHOMARAT COMPOSITES, 75002 Paris (FR)
(72) Inventeur: CHABAL, Claude, F-07310 Saint Martin de Valamas (FR)
(74) Mandataire: Vuillermoz, Bruno
(86) Numéro de dépôt international: FR0002953
(87) Numéro de publication internationale: WO01031105

(56) Documents cités:
- EP-A- 0 520 297
- FR-A- 2 409 338
- GB-A- 2 120 294
- US-A- 3 275 489
- US-A- 4 460 633
- US-A- 4 581 275

## Description

La présente invention a trait à un nouveau type de grille non tissée utilisable comme armature de renforcement et constituée de nappes de fils longitudinaux et de fils transversaux, les fils définissant entre eux des jours et leur liaison étant réalisée par collage en leur point de croisement.

Elle a trait plus particulièrement à un nouveau type de grille non tissée ajourée qui, non seulement, peut être facilement stockée, manipulée et mise en oeuvre, mais également a une structure telle que les fils longitudinaux et transversaux sont fermement liés les uns aux autres sans possibilité de déplacement. Par ailleurs, cette grille a une structure telle qu'elle permet, selon une forme de réalisation préférentielle, son utilisation comme armature de renforcement en vue de la construction ou de la réfection d'ouvrages divers dans le domaine des travaux publics (par exemple renforts de routes, structures antifissuration, structures ou supports de géotextiles...) et/ou du bâtiment pour la réalisation de murs, tunnels, égouts, chapes, cloisons, ponts, ouvrages d'art..., pour lesquels le renfort noyé à l'intérieur d'une composition de béton doit donc présenter une très bonne résistance en milieu alcalin.

### Techniques antérieures

Les grilles textiles non tissées sont des articles bien connus et sont constituées essentiellement de fils longitudinaux et de fils transversaux, appelés couramment fils de chaîne et fils de trame, les fils de trame pouvant être soit perpendiculaires aux fils de chaîne, soit inclinés par rapport à ceux-ci, la cohésion de l'ensemble étant réalisée par collage des fils entre eux par leur point de croisement, et non pas par contrecroisement comme dans le cas de tissus conventionnels.

De telles structures ajourées sont couramment utilisées comme armatures de renforcement dans de nombreux secteurs techniques, tels que le domaine papetier, le renfort de feuilles de matière plastique, la réalisation de matériaux stratifiés ou moulés ainsi que dans le domaine du bâtiment pour la réalisation de complexes pour la fabrication de chapes étanches, notamment en bitume.

De très nombreuses propositions ont été faites, et ce depuis des décennies, pour réaliser de tels articles comme cela ressort notamment du brevet français 1 537 811 ainsi que des brevets US 3 422 511, 3 643 300 ou 4 369 554.

Les fils entrant dans la constitution de telles structures sont sélectionnés en fonction des applications qui peuvent être de tout type, naturelles ou chimiques. Lorsque de telles structures grilles sont utilisées comme armatures de renforcement, on utilise fréquemment des fils chimiques, dits « fils synthétiques », qui peuvent être soit d'origine organique tel que le polyester, polyéthylène, polypropylène, aramide..., soit d'origine inorganique, tel que le verre textile, le carbone, voire même le métal.

Parmi les problèmes que pose la réalisation de telles structures grille ajourées, se pose celui du maintien, sans possibilité de déplacement des fils élémentaires longitudinaux et transversaux les uns par rapport aux autres.

Par ailleurs, se pose également le problème de la compatibilité entre l'armature et le matériau qu'elle est destinée à renforcer, les caractéristiques mécaniques de l'armature ne devant pas être détériorées par la composition de ce dernier.

Pour résoudre ces problèmes, il a été proposé de jouer d'une part sur la structure de la grille et d'autre part, sur la nature de la composition d'imprégnation des fils élémentaires permettant de les coller entre eux, cette composition, pouvant être soit à base de résines thermoplastiques, soit à base de résines thermodurcissables, dont les caractéristiques favorisent également la liaison avec les produits à renforcer, et protègent l'armature qui ne doit pas être détériorée par la composition de ces derniers.

Cela ressort notamment du préambule du GB-A-2 120 294, où il est clairement indiqué que dans le cas de grilles non tissées, qui sont obtenues par la superposition d'au moins une nappe de fils de chaîne et d'une nappe de fils de trame, que la structure en réseau est consolidée par passage dans une colle ou dans un enduit approprié destiné à coller les fils entre eux.

Dans le cas où la grille est constituée d'une nappe de trame interposée entre deux nappes de fils de chaîne, il est indiqué que les fils de chaîne des deux nappes peuvent être superposés entre eux et sont collés entre eux sur leur longueur, et également solidaires des fils de trame au point de croisement.

Une telle solution est celle qui permet d'obtenir des grilles ajourées dans lesquelles les fils sont parfaitement maintenus entre eux sans possibilité de déplacement des fils élémentaires longitudinaux et transversaux les uns par rapport aux autres.

Dans ce type de grille, les trois séries de fils se trouvent donc disposés sensiblement sur trois niveaux et forment des zones en relief au niveau des zones de croisement entre les fils longitudinaux et les fils transversaux, zones séparées entre elles par des zones légèrement en retrait constituées par les tronçons de trames et les tronçons de fils de chaîne superposés.

Or une telle structure peut, dans certaines applications où elle se trouve positionnée à proximité de la surface visible, conduire à des produits qui, après imprégnation de résine, présentent des irrégularités.

### Exposé de l'invention

Or on a trouvé, et c'est ce qui fait l'objet de la présente invention, un nouveau type de structure grille particulièrement adapté pour résoudre l'ensemble de ces problèmes.

D'une manière générale, l'invention concerne donc un nouveau type de grille non tissée constituée de fils longitudinaux et transversaux superposés, liés entre eux par collage, et qui définissent des jours permettant de noyer ladite grille à l'intérieur du matériau à renforcer, et dans laquelle :
- les fils entrant dans la constitution de ladite grille sont constitués de fils chimiques multifilamentaires, dont les caractéristiques mécaniques ne sont pas altérées par la nature de la structure à renforcer ;
- dans ladite grille, les fils transversaux sont emprisonnés entre deux séries de fils longitudinaux qui sont superposés entre eux ;
- la colle assurant la liaison des fils entre eux entoure ces derniers sur toute leur longueur et lie entre eux les paires de fils longitudinaux dans les zones comprises entre deux fils transversaux consécutifs assurant ainsi un maintien parfait desdits fils les uns par rapport aux autres.

La grille selon l'invention **se caractérise** en ce que au moins la nappe transversale est constituée de fils multifilamentaires, sans torsion, dont les filaments sont disposés parallèlement et à plat, en formant un ruban de grande largeur par rapport à son épaisseur.

Par ailleurs, et selon une forme de réalisation préférentielle, les fils longitudinaux sont également constitués de fils multifilamentaires, sans torsion, dont les filaments sont disposés parallèlement et à plat dans la grille finie en formant un ruban de grande largeur par rapport à son épaisseur.

Grâce à une telle structure, on obtient une grille dont les jours sont parfaitement définis, très fine, son épaisseur pouvant être comprise entre 0,3mm et 2 mm, et dont les constituants (fils longitudinaux et fils transversaux) sont pratiquement disposés dans un même plan.

D'une manière générale, la largeur des rubans formés par les filaments tant dans le sens long que transversalement, est avantageusement comprise entre 2 et 5 mm.

Les jours formés entre des rubans longitudinaux et transversaux sont de forme carrée ou rectangulaire, la longueur de chacun des côtés pouvant être comprise entre 5 et 20 mm, voire même plus.

Par ailleurs, si les fils longitudinaux peuvent éventuellement être légèrement tordus, selon une forme de réalisation, ils sont également à base de fils multifilamentaires sans torsion,

Par ailleurs, la nature des fils entrant dans la constitution d'une grille conforme à l'invention, sera, comme dit précédemment, fonction de l'application envisagée.

Ainsi, dans le cas d'une structure de renforcement utilisable pour réaliser une chape à base de bitume, ces fils pourront être des fils de verre.

Une telle structure est également particulièrement adaptée pour être utilisée dans le domaine des travaux publics et/ou du bâtiment pour la réalisation de murs, tunnels, égouts.... en vue de constituer un renfort noyé à l'intérieur d'une composition de béton.

Dans un tel cas, les fils utilisés seront sélectionnés parmi les fils présentant une bonne résistance en milieu alcalin, tels que par exemple les fils synthétiques à base d'alcool polyvinylique du type décrit dans les brevets européens 150513, 286112, 438780 qui présentent une telle caractéristique et qui, à ce jour, sont soit directement introduits sous forme de fibres discontinues dispersées directement à l'intérieur de la composition de ciment, notamment lorsque l'on souhaite réaliser des panneaux, soit, être éventuellement conformés sous la forme de nappes ou tissus comme cela ressort de l'EP 520297.

Dans une telle utilisation, la structure ajourée d'une grille conforme à l'invention favorise la pénétration de la composition de béton.

Comme composition liante utilisée pour réaliser le collage des fils entre eux ainsi que leur gainage, on utilisera tout type de composition à base de résine pouvant être thermoplastique ou thermodurcissable, choisie en fonction des matières formant la matrice et favorisant l'adhérence à cette dernière.

Par exemple, on peut utiliser une composition à base de chlorure de polyvinyle, de styrène butadiène, de résine epoxy... La viscosité de cette composition sera préalablement réglée afin de faciliter une bonne imprégnation des fils et la température de réticulation optimisée pour que les points de croisement des fils soient parfaitement soudés et résistent aux sollicitations mécaniques (traction, flexion, compression).

Le collage des fils entre eux et leurs gainage est obtenu, en continu avec la production de la grille, en faisant passer les nappes superposées à l'intérieur d'un bain de colle permettant d'imprégner par trempage les fils, puis, en foulardant le réseau ainsi imprégné de telle façon que tout l'air inclus dans les fils soit chassé et remplacé par la colle pour non seulement éliminer l'excès de colle, mais également assurer le gainage et le collage des fils de chaîne entre eux dans les zones comprises entre deux fils de trame consécutifs, ainsi que la mise à plat des filaments des fils transversaux et également des fils longitudinaux s'ils sont sans torsion, et enfin en séchant la grille ainsi imprégnée par passage à l'intérieur d'un four.

Grâce à une telle manière de procéder, en sortie de la ligne de fabrication, les fils transversaux sont maintenus parfaitement entre les fils longitudinaux qui sont superposés par paires de part et d'autre desdits fils transversaux et qui sont liés entre eux par collage. De plus, le gainage du fil par la colle assurant également une protection de ces derniers et une résistance améliorée par rapport à la nature des matériaux dans lesquels est incorporée ladite grille, par exemple une meilleure résistance en milieu alcalin.

### Brève description des dessins

L'invention et les avantages qu'elle apporte seront cependant mieux compris grâce aux exemples de produits réalisés conformément à l'invention, exemples qui suivent, donnés ci-après à titre indicatif, mais non limitatif, et dont la structure est illustrée par les figures annexées dans lesquelles :
- les figures 1,2 et 3 sont respectivement des vues en élévation et en coupe selon XY d'une grille réalisée conformément à l'invention et comportant des jours de forme carrée ;
- les figures 4,5 et 6 sont également des vues en élévation et en coupe selon XX et YY selon une autre forme de réalisation dans laquelle les jours sont de forme rectangulaire.

### Manière de réaliser l'invention

D'une manière générale, et en se reportant aux schémas annexés, les grilles conformes à l'invention et qui sont utilisables comme armature de renforcement, sont constituées de nappes de fils longitudinaux (1a,1b) et de fils transversaux (2), les fils définissant entre eux des jours (3) et leur liaison étant réalisée par collage en leur point de croisement.

Les fils longitudinaux et transversaux sont sélectionnés en fonction des applications et peuvent être de tout type naturel ou chimique.

Dans le cadre de la présente invention, les fils entrant dans la constitution de la grille sont constitués de fils chimiques multifilamentaires à brins continus, dont les caractéristiques mécaniques ne sont pas altérées par la nature de la structure à renforcer.

Par ailleurs, dans ladite grille, les fils transversaux (2) sont maintenus emprisonnés entre les fils longitudinaux (1a,1b) qui, par ailleurs, sont, lors de la réalisation de la grille, positionnés de telle sorte qu'ils soient superposés par paires de part et d'autre des fils transversaux (2).

Par ailleurs, dans la grille conforme à l'invention, au moins les fils transversaux (2) sont des fils multifilamentaires sans torsion et, lors de la réalisation de la grille, le complexe est traité pour que les filaments individuels soient disposés sensiblement parallèlement et à plat dans la structure en formant un ruban de grande largeur par rapport à son épaisseur.

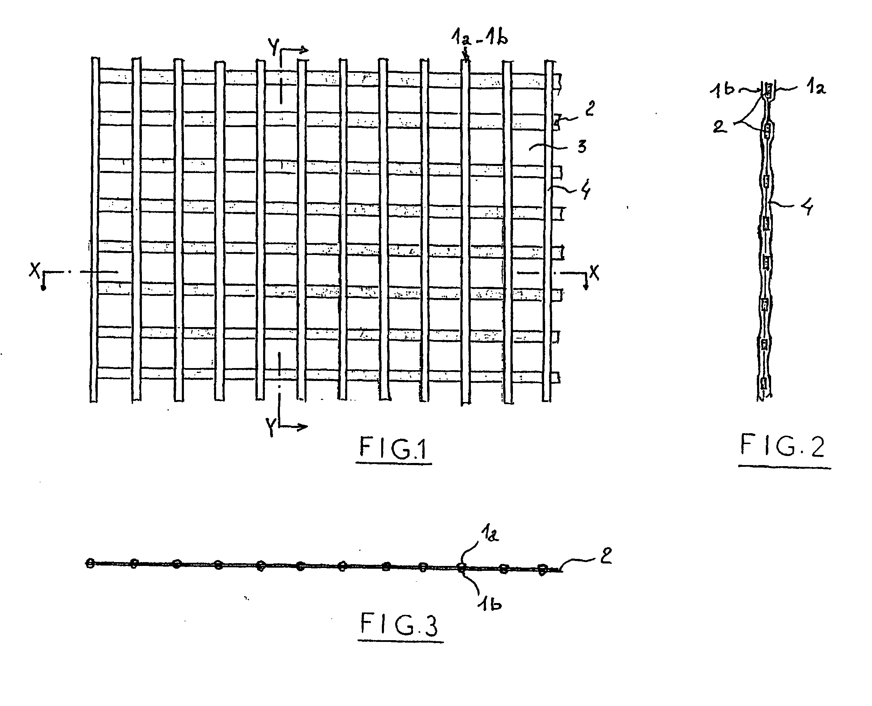

Concernant les fils longitudinaux (la), ils seront de préférence sans torsion, mais ils peuvent éventuellement avoir reçu une légère torsion pouvant atteindre 60 tours/mètre, mais étant avantageusement de l'ordre de 20 tours/mètre. Ainsi que cela ressort de l'exemple illustré par les figures 1, 2 et 3, la section desdits fils longitudinaux (la) lorsqu'ils sont légèrement tordus, sera moins aplatie que les fils transversaux (2).

Enfin et surtout, dans la grille conforme à l'invention, la colle assurant la liaison des fils entre eux forme une gaine autour de ces derniers sur toute la longueur et lient entre eux les paires de fils longitudinaux (1a,1b) dans les zones (4) comprises entre deux fils transversaux consécutifs (2), assurant ainsi un maintien parfait desdits fils les uns par rapport aux autres.

Les exemples qui suivent illustrent de manière concrète différents types de grilles conformes à l'invention.

Dans tous ces exemples, la structure grille est réalisée de manière conventionnelle sur une machine du type faisant l'objet du brevet français 2 397 439 correspondant pour partie à l'US-A-4 242 779 et qui est réglée, d'une part, pour que les fils transversaux soient maintenus parfaitement parallèles les uns par rapport aux autres et, d'autre part, pour que les fils longitudinaux soient amenés de part et d'autre de la nappe transversale formée en étant positionnés de part et d'autre de cette nappe en restant superposés par paires et non pas décalés latéralement.

En aval de la zone de formation de la grille, est disposé un bac d'imprégnation à partir d'une composition de colle suivi d'un ensemble de fourlardage constitué de deux cylindres, l'un en acier, l'autre en caoutchouc, ayant un diamètre compris entre 200 et 300 mm, l'espacement entre les cylindres étant de l'ordre de un dixième de millimètre à un millimètre. Cet ensemble de foulardage permet d'éliminer l'excès de colle, et également assure un gainage parfait tant des fils longitudinaux que transversaux ainsi qu'une mise à plat des filaments sensiblement parallèles les uns aux autres lorsqu'ils sont constitués de fils multifilamentaires exempts de torsion.

Après imprégnation, la grille passe à l'intérieur d'un four où s'opère le séchage.

### Exemple 1

Sur une machine permettant la réalisation d'une grille non tissée, on réalise un article conforme à l'invention ayant les caractéristiques suivantes.
- Fils longitudinaux (1a,1b) : fils à base d'alcool de polyvinyle fabriqués par la Société KURARAY sous la dénomination « KURALON » ayant un titre global de 2000 dtex et comportant 1000 brins, ces fils ayant reçu une légère torsion de l'ordre de 20 tours/mètre ;
- Fils transversaux (2) : fils à base d'alcool de polyvinyle de même nature que les fils longitudinaux, si ce n'est qu'ils n'ont reçu aucune torsion.

Les nappes de chaîne comportent chacune 90 fils disposés sur une largeur de 100 cm et espacés les uns des autres d'une longueur de 0,8 cm.

Les fils transversaux sont, quant à eux, distribués de manière à former une nappe de fils parallèles espacés les uns des autres de 0,8 cm.

La structure grille formée passe, en sortie de la machine grille, à l'intérieur d'un bac d'imprégnation, comportant une composition de colle ayant comme formulation donnée en parties en poids :
. PVC : 100
. plastifiant : 50
. solvant : 20

Après imprégnation, le complexe passe entre les cylindres d'un foulard conventionnel qui élimine l'excès de colle et surtout, comprime les fils longitudinaux autour des fils transversaux, ces derniers se trouvant aplatis et maintenus parfaitement emprisonnés entre les fils longitudinaux.

L'ensemble est ensuite séché par passage dans un four chauffé à une température de 170°C.

La grille obtenue pèse 200 g/m2 et comporte 130 g/m2 de fils pour 70 g/m2 de matière liante.

Les jours formés entre les fils longitudinaux et transversaux sont sensiblement de forme carrée ayant 8 mm de côté.

Les fils transversaux se présentent sous la forme de bandes aplaties ayant une largeur de l'ordre de 3 mm et une épaisseur de 0,2 mm, alors que les fils longitudinaux, compte tenu de la faible torsion qu'ils possèdent, sont légèrement moins étalés (voir figure 3).

Compte tenu du fait que les fils se présentent sous la forme de bandes aplaties, on obtient une structure dont tous les éléments sont pratiquement disposés dans un même plan, pratiquement exempt d'irrégularités de surface.

Un tel type de grille est particulièrement adapté pour être utilisé pour le renforcement d'ouvrages en ciment au lieu et place des grilles métalliques utilisées à ce jour dans ce domaine en raison de sa courbe de déformation à la fois élastique et plastique qui garantit la pérennité des ouvrages.

### Exemple 2

On répète l'exemple 1 si ce n'est que les fils longitudinaux sont également des fils sans torsion comme les fils transversaux.

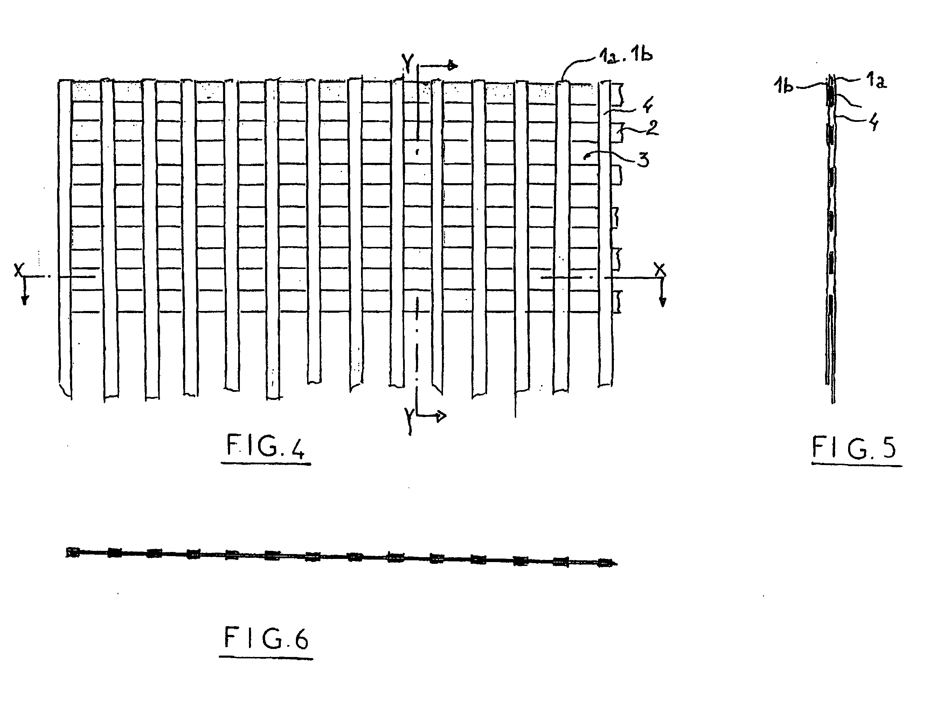

Les produits obtenus ont une structure telle qu'illustrée aux figures 4,5 et 6, les fils longitudinaux se retrouvant également sous la forme de bandes de grande largeur par rapport à leur épaisseur comme les fils transversaux.

Dans un tel type de grille, les jours sont de forme rectangulaire, ayant une longueur de 7 à 8 mm et un petit côté de 5 à 6 mm.

Comme dans l'exemple précédent, les fils longitudinaux et transversaux sont parfaitement maintenus entre eux, la matière liante gainant les fils sur toute leur longueur. Par ailleurs, les bandes que forment ces fils longitudinaux et transversaux sont pratiquement toutes disposées dans le même plan.

Un tel produit peut également être utilisé pour le renforcement de béton ou autre produit dérivé.

### Exemple 3

D'une manière similaire aux exemples précédents, on réalise une grille conforme à l'invention à partir de fils de verre.

Dans cet exemple, les fils longitudinaux et les fils transversaux sont constitués par des rovings sans torsion pouvant être constitués soit d'un seul bout élémentaire, soit de plusieurs bouts juxtaposés.

Pour une largeur de 2 mètres, la grille comporte, dans le sens transversal, des rovings (2) ayant un titre global de 600 tex qui, lors de la formation de la nappe transversale, sont distribués avec un espacement entre eux de 1 cm, cette nappe étant emprisonnée entre deux séries de fils longitudinaux (1a,1b) constitués de rovings ayant un titre global de 300 tex, espacés les uns des autres de 0,9. cm. La grille formée est imprégnée à l'intérieur d'un bain de colle, dont la composition donnée en parties en poids est la suivante :
. PVC : 100
. plastifiant : 50
. solvant : 20

Après imprégnation et foulardage, on obtient une structure similaire à celles illustrées par les figures 4 à 6, dans lesquelles les fils longitudinaux et transversaux se présentent sous la forme de rubans aplatis, les fils longitudinaux étant superposés par paires et la colle assurant un gainage non seulement au niveau des zones de croisement, mais également sur toute la longueur de chaque fil.

Une telle grille peut être utilisée en substitution des grilles conventionnelles utilisées pour la réalisation de complexes d'étanchéité ou comme matériaux de renforcement de résine.

Par rapport aux grilles proposées à ce jour pour de telles applications, comme les fils longitudinaux et transversaux se présentent sous la forme de rubans dont les filaments sont disposés parallèlement et à plat et gainés sur toute leur longueur par la matière liante, cela permet de conférer à l'ensemble une certaine raideur permettant de les utiliser dans les applications (travaux publics, ouvrages d'art, routes, bâtiments...) où une telle propriété est recherchée.

## Revendications

1. Grille non tissée, utilisable comme armature de renforcement, constituée de nappes superposées de fils longitudinaux et de fils transversaux, liés entre eux par collage, et qui définissent des jours permettant de noyer ladite grille à l'intérieur du matériau à renforcer, et dans laquelle :
- les fils (1a,1b) (2) entrant dans la constitution de ladite grille sont constitués de fils chimiques multifilamentaires, dont les caractéristiques mécaniques ne sont pas altérées par la nature de la structure à renforcer ;
- dans ladite grille, les fils transversaux (2) sont emprisonnés entre les deux séries de fils longitudinaux (1a,1b) qui sont superposés entre eux ;
- la colle assurant la liaison des fils entre eux entoure ces derniers sur toute leur longueur et lie entre eux les paires de fils longitudinaux (1a,1b) dans les zones (4) comprises entre deux fils transversaux (2) consécutifs, assurant ainsi un maintien parfait desdits fils les uns par rapport aux autres,
**caractérisée en ce que** :
- au moins la nappe transversale est constituée de fils multifilamentaires, sans torsion, dont les filaments sont disposés parallèlement et à plat en formant un ruban de grande largeur par rapport à son épaisseur.

2. Grille selon la revendication 1, caractérisée en que les fils longitudinaux (1a,1b) sont également constitués d'un fil multifilamentaire sans torsion dont les filaments sont disposés sensiblement parallèlement et à plat dans la grille finie en formant un ruban de grande largeur par rapport à son épaisseur.

3. Grille selon l'une des revendications 1 et 2, **caractérisée en ce que** la largeur des rubans formés par les filaments tant en long que transversalement, est avantageusement comprise entre 2 et 5 mm.

4. Grille selon l'une des revendications 1 à 3, **caractérisée en ce que** les jours formés entre les fils longitudinaux et transversaux sont de forme carrée ou rectangulaire.

5. Utilisation d'une grille selon l'une des revendications 1 à 4 comme armature de renforcement dans le domaine des travaux publics et/ou du bâtiment,
**caractérisée en ce que** les fils longitudinaux et les fils transversaux sont sélectionnés parmi les fils présentant une bonne résistance en milieu alcalin, tels que les fils synthétiques à base d'alcool polyvinylique.

6. Utilisation d'une grille selon l'une des revendications 1 à 4 comme élément de renforcement de résines synthétiques, revêtements d'étanchéité, **caractérisée en ce que** les fils longitudinaux et les fils transversaux sont des fils de verre.

## Claims

1. Non-woven mesh usable as reinforcement, consisting of superposed sheets of longitudinal yarns and transverse yarns, the said yarns being adhesively bonded together, which sheets define apertures allowing the said mesh to be embedded within the material to be reinforced, in which mesh:
- the yarns (1a, 1b) (2) used in the construction of the said mesh consist of multifilament chemical yarns whose mechanical properties are not impaired by the nature of the structure to be reinforced;
- in the said mesh, the transverse yarns (2) are trapped between the two series of longitudinal yarns (1a, 1b) which are mutually superposed;
- the adhesive for bonding the yarns together surrounds these over their entire length and links together the pairs of longitudinal yarns (1a, 1b) in the regions (4) lying between two consecutive transverse yarns (2), thus ensuring that the said yarns are perfectly held in place with respect to one another,
**characterized in that**:
- at least the transverse sheet consists of twist-free multi filament yarns, the filaments of which are arranged so as to be parallel and flat, forming a tape much wider than its width.

2. Mesh according to Claim 1, **characterized in that** the longitudinal yarns (1a, 1b) also consist of a twist-free multifilament yarn whose filaments are arranged so as to be approximately parallel and flat in the finished mesh, forming a tape very wide compared to its thickness.

3. Mesh according to either of Claims 1 and 2, **characterized in that** the width of the tapes formed by the filaments both lengthwise and transversely is advantageously between 2 and 5mm.

4. Mesh according to one of Claims 1 to 3, **characterized in that** the apertures formed between the longitudinal and transverse yarns are square or rectangular in shape.

5. Use of a mesh according to one of Claims 1 to 4 as a reinforcement in the civil engineering and building field, **characterized in that** the longitudinal yarns and the transverse yarns are selected from yarns having good strength in an alkaline medium, such as synthetic yarns based on polyvinyl alcohol.

6. Use of a mesh according to one of Claims 1 to 4 as a reinforcing element for synthetic resins or for membranes, **characterized in that** the longitudinal yarns and the transverse yarns are glass yarns.

## Patentansprüche

1. Gittervlies, verwendbar als Bewehrung, das aus übereinander liegenden Schichten von Längs- und Querfäden gebildet ist, die miteinander durch Verkleben verbunden sind und Öffnungen bilden, die es erlauben, das Gitter in das zu bewehrende Material einzubetten, und bei dem
- die bei der Bildung des Gitters mitwirkenden Fäden (1a, 1b) von Multifil-Chemiefasern gebildet sind, deren mechanische Eigenschaften durch die Art der zu bewehrenden Struktur nicht beeinträchtigt werden;
- die Querfäden (2) zwischen zwei Reihen übereinander liegender Längsfäden (1a, 1b) eingeschlossen sind;
- der Klebstoff, der die Bindung der Fäden untereinander gewährleistet, diese in ihrer ganzen Länge umgibt und die Längsfaden-Paare (1a, 1b) in den Bereichen (4) miteinander verbindet, die zwischen zwei aufeinanderfolgenden Querfäden (2) liegen, wodurch somit ein vollkommener Zusammenhalt zwischen den Fäden untereinander gewährleistet ist.
**dadurch gekennzeichnet, dass** wenigstens die Querschicht aus nicht gedrehten Multifil-Fasern gebildet ist, deren Filamente parallel und flachliegend angeordnet sind und hierbei, bezogen auf die Dicke, ein Band großer Breite bilden.

2. Gitter nach Anspruch 1,
**dadurch gekennzeichnet, dass** die Längsfäden (1a, 1b) ebenfalls aus nicht gedrehten Multifil-Fasern gebildet sind, deren Filamente in dem fertigen Gitter parallel und flachliegend angeordnet sind und hierbei, bezogen auf die Dicke, ein Band großer Breite bilden.

3. Gitter nach einem der Ansprüche 1 oder 2,
**dadurch gekennzeichnet, dass** die Breite der durch die Filamente sowohl in Längs- als auch in Querrichtung gebildeten Bänder vorteilhafterweise 2 bis 5 mm beträgt.

4. Gitter nach einem der Ansprüche 1 bis 3
**dadurch gekennzeichnet, dass** die zwischen den Längs- und Querfäden gebildeten Öffnungen quadratisch oder rechteckig sind.

5. Verwendung eines Gitters nach einem der Ansprüche 1 bis 4 als Bewehrung im Bereich des Tiefbaus und/oder Hochbaus,
**dadurch gekennzeichnet, dass** die Längsfäden und die Querfäden aus Fasern gewählt sind, die in alkalischer Umgebung eine gute Beständigkeit aufweisen, zum Beispiel Synthetikfasern aus Polyvinylalkohol.

6. Verwendung eines Gitters nach einem der Ansprüche 1 bis 4 als Bewehrungselement aus Kunstharzen, als Dichtungsschürze,
**dadurch gekennzeichnet, dass** die Längsfäden und die Querfäden Glasfasern sind.
